Europäisches Patentamt

(19) European Patent Office

Office européen des brevets

(11) **EP 1 010 870 B1**

(12) **EUROPEAN PATENT SPECIFICATION**

(45) Date of publication and mention
of the grant of the patent:
**25.09.2002   Bulletin 2002/39**

(51) Int Cl.[7]: **F01N 3/08**, F01N 3/04

(21) Application number: **98123799.3**

(22) Date of filing: **15.12.1998**

(54) **Exhaust gas purifying system with nitrogen oxide adsorber and operation method therefor**

Abgasreinigungssystem mit Stickstoffoxidadsorber und Betriebsverfahren

Système de purification de gaz d'échappement avec absorbeur d'oxydes d'azote et procédé
d'opération

(84) Designated Contracting States:
**DE FR GB IT**

(43) Date of publication of application:
**21.06.2000   Bulletin 2000/25**

(73) Proprietor: **DaimlerChrysler AG**
**70567 Stuttgart (DE)**

(72) Inventors:
 • **Hodjati, Shahin**
  **67000 Strasbourg (FR)**
 • **Kiennemann, Alain, Prof.**
  **67400 Illkirch (FR)**

 • **Loenders, Raf, Dr.**
  **3010 Kessel-Lo (BE)**
 • **Martens, Johan**
  **3040 Huldenberg (BE)**
 • **Petit, Corinne, Dr.**
  **67000 Strasbourg (FR)**
 • **Pitchon, Véronique, Dr.**
  **67116 Reichstett (FR)**
 • **Monticelli, Orietta, Dr.,**
  **15060 Stazzano (IT)**

(56) References cited:
  WO-A-98/07504     DE-C- 4 319 294
  DE-C- 19 628 796     GB-A- 2 042 365

## Description

The invention relates to an exhaust gas purifying system according to the precharacterizing part of claim 1 and to a method of operating an exhaust gas purifying system according to the precharacterizing part of claim 5.

Such systems and methods are e.g. conventionally used for purifying the exhaust gas from combustion engines of motor vehicles. The nitrogen oxides being produced in higher quantities particularly during lean-burn operation of the motor, are temporarily stored in the adsorber by adsorption, and are released again at an appropriate time during the desorption operation of the system. The released nitrogen oxides are then properly converted, e.g. by exhaust gas recirculation or adding a reducing agent, like ammonia or urea or an exhaust gas stream of rich composition, i.e. having a more than stoichiometric fuel amount. Such a rich exhaust gas stream can be provided e.g. by switching the motor operation mode by post-injection of fuel into the motor combustion chamber or by additional fuel injection into the exhaust manifold.

In patent application DE 43 19 294 C1 exhaust gas purifying systems and methods of operation of this type are described, in which two catalytic adsorbers in parallel conduit branches are alternately operated in adsorption and desorption mode or in which, when only one catalytic adsorber is present, a bypass conduit is provided through which during the desorption mode at least a main part of the exhaust bypasses the catalytic adsorber and is passed through the three-way catalytic converter. A Perowskite material, in particular LaCoO$_3$, is mentioned as the adsorber material. To carry out the desorption operation, the catalytic adsorber is heated to a desorption temperature higher than its operation temperature during desorption mode, to which aim an electric heating device is provided. In addition, the supply of an air stream or a portion of the exhaust gases emitted from the motor as a purging air stream can be provided to expel the desorbed nitrogen oxides off the catalytic adsorber and supply them to an exhaust gas recirculation pipe. The air stream may be heated by the heating device before or at entering the catalytic adsorber.

It is the technical problem of the invention to provide an exhaust gas purifying system and an operation method therefor as mentioned above, which are able to accomplish with relatively low effort an effective adsorption of nitrogen oxides included in the exhaust gas as well as an effective desorption therefor and thus an effective regeneration of the adsorber.

The invention solves this problem by providing an exhaust gas purifying system having the features of claim 1 as well as of a method having the features of claim 5.

The exhaust gas purifying system of claim 1 characteristically includes means for accomplishing a swing in the nitrogen oxide partial pressure when switching from adsorption to desorption mode, the pressure swing means comprising means for supplying to the adsorber a water-containing desorption gas during desorption operation.

It turns out that such pressure swing can significantly improve the desorption capability, in particular for appropriate adsorption materials and in special cases even without increasing the temperature. In addition it turns out that the use of wet, instead of dry, desorption gas can lead to an improved desorption capability when maintaining the other process parameters constant. In particular, an air stream. wetted with water can be used.

It is assumed that the desorption-assisting behaviour results from the water involved as well as from the fact that the supply of a desorption gas changes the nitrogen oxide partial pressure in the adsorber when switching from adsorption to desorption mode. Both effects can have an influence on the reaction equilibrium equations and can in this way favour the desorption.

A preferred embodiment of the exhaust gas purifying system as given in claim 2 include means for maintaining, increasing, or even reducing the temperature in the adsorber during the desorption mode, as compared with the temperature during adsorption mode. Using the temperature reducing means makes it possible to maintain the adsober during desorption at a temperature lower than that during during adsorption mode. Here, it turns out surprisingly, and in contrast to the usual increase in temperature during desorption, that by combining such a temperature decrease with the supply of the water-containing wet desorption gas, an effective desorption can be obtained. In particular, the temperature reducing means can consist of means which supply the water-containing, wet desorption gas at a temperature lower than that of the adsorption operation temperature of the adsorber, e.g. at room temperature, so that the cool desorption gas is able to cool the adsorber as desired and with low effort.

In a further preferred system as given by claim 3 a catalytic converter with an oxidizing function, e.g. a pure oxidation catalytic converter or a three-way catalytic converter, precedes the nitrogen adsorber. In adsorption mode the exhaust gas output from the oxidizing catalytic converter is fed to the adsorber, while this exhaust gas link is closed during the period of the corresponding desorption phase, the exhaust gas output from the oxidizing catalytic converter being passed, for example through another adsorber which at the same time is in adsorption mode. In a further preferred embodiment an oxidizing function is combined with the adsorbent material, e.g. by dispersing a noble metal such as platinum on the adsorbent solid. This oxidation function fulfills the role of the oxidation catalytic converter placed in front of the adsorbent explained in the previous embodiment. In a further preferred embodiment of the exhaust gas purifying system there are provided a desorption gas supply unit such that during desorption mode an exhaust gas from a lean-controlled combustion process not passed through an oxidizing catalytic converter before may be supplied to the adsorber, as well as means for increasing the temperature in the adsorber during desorption mode. It turns out that by choosing appropriate adsorber materials an effective desorption can be accomplished by supplying the exhaust gas stream to the adsorber and increasing the temperature in the adsorber as compared to that during adsorption mode.

In a preferred embodiment of the exhaust gas purifying system as given by claim 4 the adsorber includes a special material, namely a Na-Y, Ba-Y or a Ba-La(x%)-Y zeolite material, with 0<x<100, or a heteropolyacid material of the formula $H_3NM_{12}O_{40} \cdot 6H_2O$ or $H_4NM_{12}O_{40} \cdot nH_2O$ (with M = W or Mo, N = P, Si, or ge, and n an integer, e.g. n = 14, 15, or 24). It turns out that adsorbers with these adsorber materials have sufficient adsorption capability and can be effectively regenerated by supplying the water-containing, wet desorption gas, and that can be achieved even at the same temperature as for the adsorption phase.

The operation method according to claim 5 characteristically includes to induce a nitrogen oxide partial pressure swing when switching from adsorption to desorption mode by the supply of of a water-containing desorption gas to the nitrogen oxide adsorber during desorption mode. This method is in particular suited for the operation of the exhaust gas purifying system of any one of claims 1 to 4. As stated above, a use of such wet instead of a dry desorption gas can promote the desorption.

In a preferred embodiment as given by claim 6 the method includes selection of a desorption temperature in the adsorber lower than that during adsorption. This in contrast to the usual temperature increase during desorption mode. Surprisingly it turns out that in particular also with this temperature decrease in connection with using the water-containing, wet desorption gas a sufficient desorption can be obtained. In a preferred embodiment of the method as given by claim 7 this temperature reduction for the desorption can be obtained with particularly low effort by supplying the wet desorption gas with a temperature lower than the adsorption operation temperature.

In a preferred embodiment of the method as given by claim 8 the desorption temperature is chosen to be lower than 200° C and preferably lower than 100° C. The methods according to claim 6 or 7 are particularly suited for operation of the system according to claim 2.

Within the operation method according to claim 9, characteristically a temperature increase as compared with the adsorption operation is provided in connection with the supply of a special desorption gas, namely a water-containing, wet desorption gas or an exhaust gas stream resulting from a lean-controlled combustion process, for the purpose of regeneration of a nitrogen oxide adsorber, the adsorber material of which being appropriately selected from a group of suited materials. It turns out that also by such desorption process control a satisfactory desorption is obtained.

Preferred embodiments of the invention are illustrated in the drawings described below with reference thereto , in which drawings

Fig. 1 shows a block diagram of the part of interest herein of an exhaust gas purifying system having an adsorber being in desorption mode with isothermal desorption gas supply,

Fig. 2 shows a block diagram corresponding to figure 1, but for a modified exhaust gas purifying system with heating desorption gas supply,

Fig. 3 shows a block diagram corresponding to figure 1, but for a modified exhaust gas purifying system with cooling desorption gas supply, and

Fig. 4 shows a plot diagram to illustrate an adsorption and desorption cycle of a system according to figure 3.

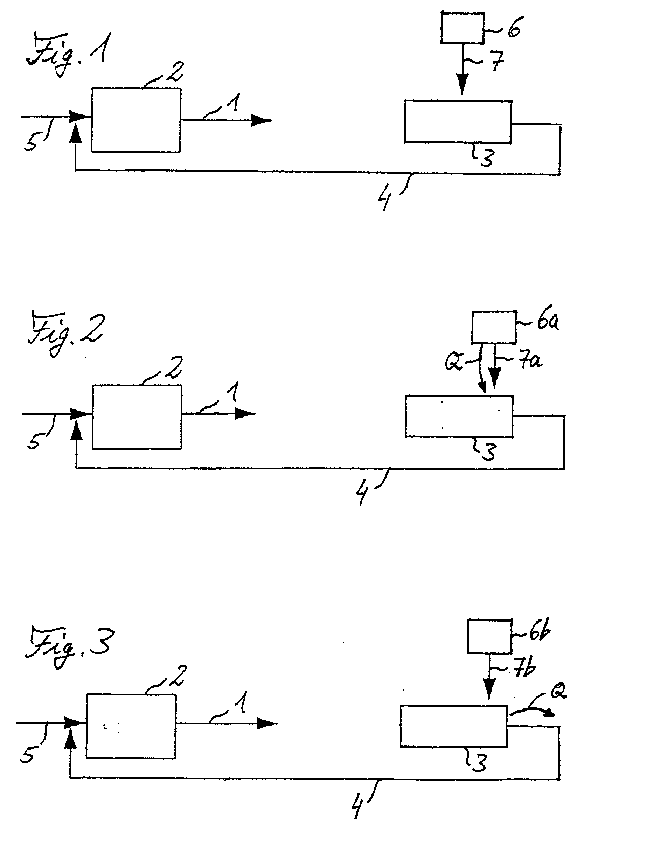

In figures 1 to 3 only the part of interest herein of a respective exhaust gas purifying system is shown, which system is used to purify the exhaust gases 1 of an internal combustion engine 2 being e.g. generated by a motor vehicle. In all three cases the exhaust gas purifying system comprises a nitrogen oxide adsorber 3 and an exhaust gas recirculation 4. In the illustrated desorption mode, the gas emanating from the nitrogen oxide adsorber 3 and including the desorbed nitrogen oxides is recirculated through the exhaust gas return conduit 4 into an intake manifold 5 of the motor 2.

In adsorption mode of the adsorber 3 the exhaust gas 1 emitted from the motor 2 preferably driven in lean operation is passed through the adsorber 3 which adsorbes the nitrogen oxides contained in the exhaust gas. Here it is preferred to position an oxidizing catalytic converter, not shown, in front of the adsorber 3, which oxidizing catalytic converter besides other functions accomplishes an at least partial oxidation of NO to $NO_2$. The adsorber material for the adsorber 3 is in this case suitably chosen such that a co-adsorption of NO as well as $NO_2$ is achieved. In desorption mode the exhaust gas supply from the oxidizing catalytic converter to the adsorber 3 is stopped, as indicated in figures 1 to 3 by the missing link of the exhaust gases 1 output from the motor 2 to the adsorber 3.

Further, the exhaust gas purifying system contains other exhaust manifold components of known type, which need not be mentioned in detail here. For example, a multiplicity of parallel adsorbers and/or a bypass conduit for the adsorber 3 could be provided analogous to the exhaust manifold realizations disclosed in the above-cited DE 43 19 294 C1.

The present inventive exhaust gas purifying system and the corresponding inventive operation method for such system are characterized by the selection of special desorption measures in connection with using proper adsorber materials. This is based on the following findings.

When using a Na-Y zeolite material as adsorber material for a standard lean-burn diesel motor exhaust gas, this material shows a high and reversible nitrogen oxide adsorption capacity at temperatures below 200°C. However, it is found that in this case substantially only $NO_2$ is adsorbed, while NO is even produced additionally in small quantities. This material also shows sulfur poisoning effects, because it irreversibly adsorbs $SO_2$ contained in the exhaust gas at the sites which are otherwise responsible for the reversible adsorption of $NO_2$. Investigations reveal the adsorbed $NO_x$ species to be nitrate-like. Heating is required to desorb and decompose the same. Experiments have further shown that water contained in the exhaust gas influences the adsorption and desorption process. Under the process conditions mentioned above, based on these investigations the following reaction equilibrium upon contacting the Na-Y zeolite material with oxidized exhaust gas can be proposed:

$$3 \cdot NO_2 + H_2O \leftrightarrow NO + 2 \cdot HNO_3,$$

wherein the nitric acid yields the nitrate species on the basic zeolite material.

A complete different behaviour is observed when the same Na-Y zeolite material is calcined at 600°C in dry air and then used as an adsorber material for a lean exhaust gas, i.e. one emanating from a lean-burn operation of the corresponding combustion source, at a temperature between 200°C and 350°C. In this case a co-adsorption of NO and $NO_2$ is observed. By altering the $NO/NO_2$ ratio of the exhaust gas, it is shown that NO is adsorbed only in the presence of $NO_2$. Further, it is found that the nitrogen oxide adsorption capacity, when $SO_2$ is present in the exhaust gas, does not decrease, since the adsorption of $SO_2$ is strongly temperature dependent. While a significant $SO_2$ adsorption takes place at 150°C, no $SO_2$ adsorption is observed at 250°C. The nature of the adsorbed $NO_x$ species is also temperature dependent, nitrite species being found on the adsorber material after adsorption of a mixture of NO and $NO_2$. With these observations several adsorption equilibrium reactions, described in the literature for zeolites at low temperatures using dry gases or for the formation of nitrous acid, fit as follows:

$$NO + NO_2 \leftrightarrow N_2O_3 \leftrightarrow NO^+ + NO_2^-$$

and

$$NO + NO_2 + H_2O \leftrightarrow 2 \cdot HNO_2,$$

The nitrous acid yields the nitrite species on the active adsorption sites of the zeolite material.

Further investigations in this direction have now shown that said Na-Y adsorber material can be regenerated quite easily by a change or swing of the $NO_x$ partial pressure and/or the temperature, wherein some different procedures turn out to be particularly suited, as described below in more detail with reference to the systems shown in figures 1 to 3. The adsorption operation in these systems with Na-Y adsorber material in the adsorber 3 is carried out in the temperature region of co-adsorption of NO and $NO_2$ between about 200°C and about 350°C.

In figure 1 a first method of this kind is illustrated, in which for example a Na-Y zeolite material pretreated at 600°C by calcination is used as adsorber material in the adsorber 3, which material initially shows an adsorption capacity of about 8mg NO per gram adsorber material. We use the convention here, and in the following, that all the nitrogen oxide ($NO_x$) molecules are counted as NO when specifying adsorption capacity. This enables comparisons to be made more easily when mixed $NO-NO_2$ adsorptions are measured. Adsorber operation means are provided in the system of figure 1 to carry out the desorption cycles, which means include a desorption gas supply unit 6 able to prepare a water-containing, wet air stream 7 and to supply the same substantially isothermally into the adsorber 3, i.e. the wet air stream 7 is heated to the operation temperature of the adsorber 3 by a corresponding heater before entering the adsorber 3. After several alternating adsorption and desorption cycles a steady adsorption and desorption capacity of about 2,8mg NO per gram adsorber material results under these conditions.

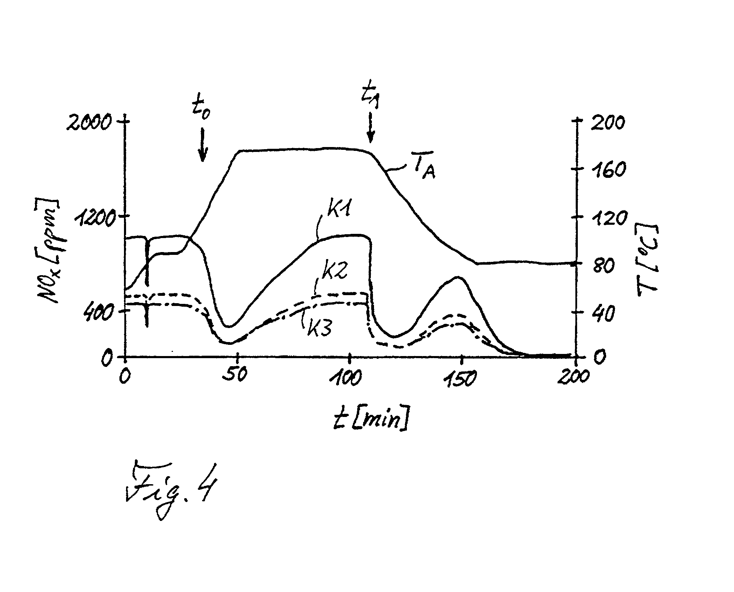

In an alternative method, as illustrated with respect to the system of figure 2, the same Na-Y zeolite material is used, and the adsorption-desorption cycles run like the ones in the system of figure 1 except that in desorption mode the adsorber material is heated above the operation temperature in adsorption mode by supply of heat Q. This heat supply is done preferably through the wet air stream 7a which is supplied to the adsorber 3 during the desorption, i.e. the adsorber operation means in this case comprise a desorption gas supply unit 6a which heats the wetted air stream by a corresponding heater to the desired temperature higher than the adsorption operation temperature of the adsorber 3 and supplies the provided hot, wet air stream 7a to the adsorber 3. In doing so the adsorber 3 is heated from the adsorber temperature range between 200°C and 350°C through a significantly higher temperature of typically up to about 500°C. In addition to the desorption portion effected by the supply of wet air and the $NO_x$ partial pressure swing caused therefrom, when reaching the increased temperature a second desorption portion appears caused by the temperature increase, resulting in a practically complete regeneration of the adsorber material so that its initial, high $NO_x$ adsorption

capacity of about 8mg NO per gram zeolite material can be maintained.

In a modification of the method described with respect to figure 2, a non-oxidized, hot exhaust gas stream can be supplied to the adsorber 3 for desorption purposes instead of the hot, wet air stream 7a. In particular, the exhaust gas 1 directly output from motor 2 can be used in this respect, with bypassing an eventually interposed oxidizing catalytic converter, especially when motor 2 is a diesel motor and is operated lean. Experiments have shown that also with such exhaust desorption gas stream a practically complete regeneration of the adsorber 3 can be accmplished when raising the desorption temperature to at least about 400°C.

Another approach according to the present invention, specifically regarding the desorption cycles, is illustrated with reference to the system of figure 3. In this method the adsorber operation means include a desorption gas supply unit 6b which prepares a wet air stream 7b as a desorption gas stream and supplies the same to the adsorber 3 at a temperature lower than the adsorption operation temperature. In particular it is possible to supply the wet air stream to the adsorber 3 at room temperature. In this way a temperature decrease takes place when switching from adsorption to desorption mode in addition to the $NO_x$ partial pressure swing caused by the supply of the wet air stream. This adsorber cooling to a temperature lower than 200°C, preferably to a temperature in the range of 100°C or less, surprisingly also results in a satisfactory regeneration of the adsorber material. Laboratory experiments show, for example, that in wet air atmosphere at 100°C more nitrogen oxides are released than at 250°C and that the desorption depends on the water content of the desorption gas. In dry air no $NO_x$ desorption is observed under the given conditions. Experiments show, however, that a water content between about 1% and about 10% together with a temperature decrease can already lead to a practically complete desorption. The method as explained with respect to the system of figure 3 has the great advantage that no heating of the adsorber 3 or the desorption gas stream supplied thereto is required, but the latter can be supplied to the adsorber 3 at room temperature and removes heat Q therefrom, so that the desired temperature decrease is accomplished. Separate cooling means are thus not necessary for this purpose. With this regeneration method a steady $NO_x$ adsorption capacity of more than 7mg NO per gram zeolite material has been reached.

The Na-Y zeolite material is found to be a suitable adsorber material for all desorption methods explained above, which material allows for a co-adsorption of NO and $NO_2$ in a favorable temperature range between 200°C and 350°C without sulfur poisoning problems in absorption mode and also allows for a substantially complete regeneration of the adsorber 3 in desorption mode. The Na-Y zeolite material can be used in powder form or in the form of a monolithic adsorber.

Instead of the Na-Y zeolite material, alternative adsorber materials can be used, while maintaining the advantages of the operational method of the present invention as described, such as a Ba-Y zeolite material or a Ba-La(x%)-Y zeolite material, the latter being a Ba-Y zeolite material with an admixture of x%La, with 0<x<100. These zeolite materials show a high adsorption capacity for $NO_2$ in the temperature range between 80°C and 300°C, the adsorption mechanism being similar to the one described above for the adsorption by a Na-Y zeolite material below 200°C. Preliminary investigations show that to regenerate these zeolite materials preferably a temperature increase above the temperature level of the absorption mode should be chosen, which temperature increase depends on the composition of the supplied desorption gases. For example, the presence of NO and reducing agents, like CO and propene, facilitates the desorption. Also the exhaust gas coming straight from a combustion engine turns out to be useful for the desorption of these adsorber materials. The addition of lanthana increases the resistance of these zeolite materials against $SO_2$ poisoning, while on the other hand the $NO_x$ adsorption capacity is lowered simultaneously. An amount of lanthana in the range of 20% seems to be a good compromise. While such adsorber material at the beginning shows some $SO_2$ adsorption, this adsorption saturates by maintaining a quite high $NO_x$ adsorption capacity of e.g. 6,4mg NO per gram zeolite material.

Another class of materials promising for use as adsorber material in the present invention are heteropolyacids of the general formula $H_3NM_{12}O_{40} \cdot 6H_2O$ or $H_4NM_{12}O_{40} \cdot nH_2O$ with M and N standing for some appropriate chemical element(s), e.g. M being tungsten or molybdenum and N being P, Si or Ge, while n is an integer, such as e.g. n = 14, 15, or 24. Figure 4 shows in a plot diagram an adsorption and desorption cycle examined with $H_3PW_{12}O_{40} \cdot 6H_2O$ as adsorber material and by applying the approach with supply of a wet desorption air stream at room temperature as described with reference to figure 3. In this diagram the time t is plotted on the abscissa, while on the left ordinate the nitrogen oxide concentration of the exhaust gas output from the adsorber 3 and on the right ordinate the temperature T in the adsorber 3 are given. Further, the behaviour of the temperature in the adsorber 3 is represented by a curve $T_A$, the total nitrogen oxide concentration in the exhaust gas outputted is represented by a curve K1 drawn with a continuous line, the $NO_2$ portion thereof is represented by a dashed curve K2, and the NO portion is represented by a dash-dotted curve K3.

As can be seen from this diagram, a significant $NO_x$ adsorption by co-adsorption of NO and $NO_2$ begins at a time $t_0$ at which the adsorber temperature $T_A$ reaches a range from about 80°C to 100°C. The adsorber temperature $T_A$ then increases further up to about 170°C and the $NO_x$ adsorption continues, while gradually decreasing after reaching a maximum according to the increasing saturation of the adsorber material, as seen by the three nitrogen oxide concentration curves K1, K2, K3 going through a local minimum corresponding therewith. After saturation has been reached, one switches to desorption operation at a time $t_1$ by stopping the supply of exhaust gas into the adsorber 3 and instead injecting therein the wet desorption air stream at room temperature. This results on the one hand in a gradual decrease of the adsorber temperature $T_A$ to a value of about 80°C by the cooling effect of the air stream. The measured concentration of the nitrogen oxide components in the exhaust gas falls abruptly at the beginning, since the supply of motor exhaust gas has been switched to the supply of the air stream containing substantially less nitrogen oxides and the desorption does not react so fast. The latter then starts gradually until reaching a maximum corresponding to the local maxima of the various nitrogen oxide concentration curves K1, K2, K3 at $t \approx 150$min, whereafter the desorption decreases to zero. A quantitative comparison reveals that practically all of the nitrogen oxide amount of about 38mg $NO_x$ per gram adsorber material adsorbed in the previous adsorption cycle has been released in the desorption cycle. It should be noted that heteropolyacid structures are completely resistant to $SO_2$ poisonning.

It is understood that besides the disclosed embodiments other realizations of the invention are possible. For example, instead of the exhaust gas recirculation shown some other conventional method of converting the nitrogen oxides released from the adsorber 3 after being temporarily stored therein can be provided, such as a succeeding nitrogen oxide catalytic reduction stage.

**Claims**

1. Exhaust gas purifying system, preferably for a motor vehicle internal combustion engine, comprising

   - a nitrogen oxide adsorber (3) and
   - adsorber operation means for alternately operating the adsorber in adsorption and desorption mode and for passing the exhaust gas of a combustion source through said adsorber at least in adsorption mode, said operation means including a desorption gas supply unit (6) for supplying a desorption gas (7) to said adsorber during desorption mode, wherein said desorption gas supply unit (6) includes pressure swing means for accomplishing a pressure swing of the nitrogen oxide partial pressure when switching from adsorption to desorption mode

   **characterized in that**

   - said pressure swing means comprises means for supplying a water-containing desorption gas.

2. Exhaust gas purifying system according to claim 1, further
   **characterized in that**
   said adsorber operation means include means for increasing or decreasing or for keeping constant the temperature in said nitrogen oxide adsorber (3) during desorption mode.

3. Exhaust gas purifying system according to claim 1 or 2, further
   **characterized in that**
   an oxidizing catalytic converter preceding said nitrogen oxide adsorber (3).

4. Exhaust gas purifying system according to one of claims 1 to 3, further
   **characterized in that**
   the nitrogen oxide adsorber (3) comprises a Na-Y, Ba-Y or a Ba-La(x%)-Y zeolite material, with $0<x<100$, or a heteropolyacid material of the form $H_3NM_{12}O_{40} \cdot 6H_2O$ or $H_4NM_{12}O_{40} \cdot nH_2O$, with M = W or Mo, N = P, Si, or ge, and n an integer, as adsorber material.

5. Method for operating an exhaust gas purifying system having a nitrogen adsorber, preferably a system according to one of claims 1 to 4, in which

   - said nitrogen oxide adsorber (3) is alternately operated in adsorption and desorption mode, during adsorption mode exhaust gas of a combustion source being passed through said adsorber and during desorption mode a desorption gas (7) being supplied to said adsorber, wherein a pressure swing of the nitrogen oxide partial pressure is induced when switching from adsorption to desorption mode,

   **characterized in that**

   - said pressure swing is made by supplying a water-containing gas (7) as said desorption gas to said nitrogen oxide adsorber (3).

6. Method according to claim 5, further
   **characterized in that**
   the temperature in said nitrogen oxide adsorber (3) is reduced during desorption mode as compared to that in adsorption mode.

7. Method according to claim 6, further
   **characterized in that**
   the wet desorption gas (7b) is supplied with a temperature lower than the adsorption operation temperature.

**8.** Method according to claim 6 or 7, further **characterized in that**
the temperature during desorption mode is chosen to be lower than 200° C, preferably lower than 100° C.

**9.** Method according to claim 5, for operating an exhaust gas purifying system having a nitrogen oxide adsorber which includes a Na-Y, Ba-Y or a Ba-La (x%)-Y zeolite material, with 0<x<100, or a heteropolyacid material of the form $H_3NM_{12}O_{40}\cdot6H_2O$ or $H_4NM_{12}O_{40}\cdot nH_2O$, with M = W or Mo, N = P, Si, or ge, and n an integer, as adsorber material, further **characterized in that**
in desorption mode a water-containing, wet gas or an exhaust gas stream not passed through an oxidizing catalytic converter before is supplied to said nitrogen oxide adsorber as said desorption gas to accomplish the pressure swing and the temperature in said adsorber is increased with respect to that in adsorption mode.

**Patentansprüche**

**1.** Abgasreinigungssystem, bevorzugt für einen Kraftfahrzeugverbrennungsmotor, umfassend:

- einen Stickoxidadsorber (3) und
- ein Adsorberbetriebsmittel zum wechselnden Betreiben des Adsorbers im Adsorptionsmodus und Desorptionsmodus und zum Durchleiten des Abgases einer Verbrennungsquelle durch den Adsorber mindestens im Adsorptionsmodus, wobei das Betriebsmittel eine Desorptionsgaszufuhreinheit (6) zum Zuführen eines Desorptionsgases (7) zu dem Adsorber während des Desorptionsmodus enthält, wobei die Desorptionsgaszufuhreinheit (6) ein Druckwechselmittel enthält, um beim Umschalten von dem Adsorptionsmodus zu dem Desorptionsmodus einen Druckwechsel des Stickoxidpartialdrucks zu erzielen,

**dadurch gekennzeichnet, daß**

- das Druckwechselmittel ein Mittel zum Zuführen eines wasserhaltigen Desorptionsgases umfaßt.

**2.** Abgasreinigungssystem nach Anspruch 1, weiterhin **dadurch gekennzeichnet, daß**
das Adsorberbetriebsmittel ein Mittel zum Erhöhen oder Senken oder zum Konstanthalten der Temperatur in dem Stickoxidadsorber (3) während des Desorptionsmodus enthält.

**3.** Abgasreinigungssystem nach Anspruch 1 oder 2, weiterhin **dadurch gekennzeichnet, daß**
ein oxidierender Katalysator vor den Stickoxidadsorber (3) geschaltet ist.

**4.** Abgasreinigungssystem nach einem der Ansprüche 1 bis 3, weiterhin **dadurch gekennzeichnet, daß** der Stickoxidadsorber (3) ein Na-Y-, Ba-Y- oder ein Ba-La(x%)-Y-Zeolithmaterial mit 0<x<100 oder ein Heteropolysäurematerial der Form $H_3NM_{12}O_{40}\cdot6H_2O$ oder $H_4NM_{12}O_{40}\cdot nH_2O$ mit M = W oder Mo, N = P, Si oder Ge und n einer ganzen Zahl, als Adsorbermaterial umfaßt.

**5.** Verfahren zum Betreiben eines Abgasreinigungssystems mit einem Stickstoffadsorber, bevorzugt ein System nach einem der Ansprüche 1 bis 4, bei dem

- der Stickoxidadsorber (3) abwechselnd im Adsorptionsmodus und Desorptionsmodus betrieben wird, wobei während des Adsorptionsmodus Abgas einer Verbrennungsquelle durch den Adsorber geleitet und während des Desorptionsmodus ein Desorptionsgas (7) dem Adsorber zugeführt wird, wobei beim Umschalten vom Adsorptionsmodus in den Desorptionsmodus ein Druckwechsel des Stickoxidpartialdrucks eingeleitet wird,

**dadurch gekennzeichnet, daß**

- der Druckwechsel durch Zuführen eines Wasser enthaltenden Gases (7) als das Desorptionsgas zu dem Stickoxidadsorber (3) vorgenommen wird.

**6.** Verfahren nach Anspruch 5, weiterhin **dadurch gekennzeichnet, daß**
die Temperatur in dem Stickoxidadsorber (3) im Vergleich zu der im Adsorptionsmodus während des Desorptionsmodus reduziert wird.

**7.** Verfahren nach Anspruch 6, weiterhin **dadurch gekennzeichnet, daß**
das nasse Desorptionsgas (7b) mit einer unter der Adsorptionsbetriebstemperatur liegenden Temperatur zugeführt wird.

**8.** Verfahren nach Anspruch 6 oder 7, weiterhin **dadurch gekennzeichnet, daß**
die Temperatur während des Desorptionsmodus so gewählt wird, daß sie unter 200°C, vorzugweise unter 100°C liegt.

**9.** Verfahren nach Anspruch 5 zum Betreiben eines Abgasreinigungssystems mit einem Stickoxidsorber, der ein Na-Y-, Ba-Y- oder ein Ba-La(x%)-Y-Zeolithmaterial mit 0<x<100 oder ein Heteropo-

lysäurematerial der Form $H_3NM_{12}O_{40} \cdot 6H_2O$ oder $H_4NM_{12}O_{40} \cdot nH_2O$ mit M = W oder Mo, N = P, Si oder Ge und n einer ganzen Zahl, als Adsorbermaterial enthält, weiterhin **dadurch gekennzeichnet, daß** im Desorptionsmodus ein Wasser enthaltendes nasses Gas oder ein Abgasstrom, der vorher noch nicht durch einen oxidierenden Katalysator geleitet wurde, dem Stickoxidadsorber als Desorptionsgas zugeführt wird, um den Druckwechsel zu erzielen, und die Temperatur in dem Adsorber bezüglich der im Adsorptionsmodus erhöht wird.

**Revendications**

1. Système d'épuration de gaz d'échappement, de préférence pour un moteur à combustion interne de véhicule à moteur, comprenant :

   - un adsorbeur d'oxydes d'azote (3), et
   - un moyen d'actionnement d'adsorbeur pour actionner l'adsorbeur tour à tour en mode d'adsorption et en mode de désorption et pour faire passer les gaz d'échappement d'une source de combustion dans ledit adsorbeur au moins en mode d'adsorption, ledit moyen d'actionnement incluant une unité de fourniture de gaz de désorption (6) pour fournir un gaz de désorption (7) audit adsorbeur pendant le mode de désorption, où ladite unité de fourniture de gaz de désorption (6) inclut un moyen d'oscillation de pression pour accomplir une oscillation de pression de la pression partielle des oxydes d'azote lors du passage du mode d'adsorption au mode de désorption,

   **caractérisé en ce que** :

   - ledit moyen d'oscillation de pression comprend un moyen pour fournir un gaz de désorption contenant de l'eau.

2. Système d'épuration de gaz d'échappement selon la revendication 1, **caractérisé en outre en ce que** ledit moyen d'actionnement d'adsorbeur inclut un moyen pour augmenter ou abaisser ou pour maintenir constante la température dans ledit adsorbeur d'oxydes d'azote (3) pendant le mode de désorption.

3. Système d'épuration de gaz d'échappement selon la revendication 1 ou 2, **caractérisé en outre en ce qu'**un convertisseur catalytique oxydant précède ledit adsorbeur d'oxydes d'azote (3).

4. Système d'épuration de gaz d'échappement selon l'une des revendications 1 à 3, **caractérisé en outre en ce que** l'adsorbeur d'oxydes d'azote (3) comprend un matériau zéolithique Na-Y, Ba-Y ou Ba-La (x%)-Y, avec 0<x<100, ou un matériau hétéropolyacide de forme $H_3NM_{12}O_{40}, 6H_2O$ ou $H_3NM_{12}O_{40}, nH_2O$, avec M = W ou Mo, N = P, Si ou ge, et n est un entier, comme matériau d'adsorbeur.

5. Procédé pour actionner un système d'épuration de gaz d'échappement ayant un adsorbeur d'azote, de préférence un système selon l'une des revendications 1 à 4, où :

   - ledit adsorbeur d'oxydes d'azote (3) est actionné tour à tour en mode d'adsorption et en mode de désorption, pendant le mode d'adsorption les gaz d'échappement d'une source de combustion étant amenés à passer dans ledit adsorbeur et pendant le mode de désorption un gaz de désorption (7) étant fourni audit adsorbeur, où une oscillation de pression de la pression partielle des oxydes d'azote est induite lors du passage du mode d'adsorption au mode de désorption, **caractérisé en ce que** :
   - ladite oscillation de pression est réalisée par la fourniture audit adsorbeur d'oxydes d'azote (3) d'un gaz contenant de l'eau (7) comme gaz de désorption.

6. Procédé selon la revendication 5, **caractérisé en outre en ce que** la température dans ledit adsorbeur d'oxydes d'azote (3) est réduite pendant le mode de désorption par rapport à celle du mode d'adsorption.

7. Procédé selon la revendication 6, **caractérisé en outre en ce que** le gaz de désorption humide (7b) est fourni à une température inférieure à la température d'actionnement de l'adsorption.

8. Procédé selon la revendication 6 ou 7, **caractérisé en outre en ce que** la température pendant le mode de désorption est choisie pour être inférieure à 200° C, de préférence inférieure à 100° C.

9. Procédé selon la revendication 5 pour actionner un système d'épuration de gaz d'échappement ayant un adsorbeur d'oxydes d'azote qui inclut un matériau zéolithique Na-Y, Ba-Y ou Ba-La(x%)-Y, avec 0<x<100, ou un matériau hétéropolyacide de forme $H_3NM_{12}O_{40}, 6H_2O$ ou $H_3NM_{12}O_{40}, nH_2O$, avec M = W ou Mo, N = P, Si ou ge, et n est un entier, comme matériau d'adsorbeur, **caractérisé en outre en ce que**, en mode de désorption, un gaz humide contenant de l'eau ou un courant de gaz d'échappement qui n'a pas traversé un convertisseur catalytique oxydant est fourni audit adsorbeur d'oxydes d'azote comme gaz de désorption pour accomplir l'oscillation de pression, et la température dans ledit adsorbeur est augmentée par rapport à celle du mode d'adsorption.

Fig. 1

Fig. 2

Fig. 3

Fig. 4